# FASCICULE DE BREVET EUROPEEN

(11) **EP 1 431 639 B1**
(45) Date de publication et mention de la délivrance du brevet: **14.11.2007**
(21) Numéro de dépôt: 02447261.5
(22) Date de dépôt: 19.12.2002
(51) Int. Cl.: F16K 31/126, F16K 41/10, F16K 1/12

(54) **Vanne à actionneur intégré**
Ventil mit integriertem Antrieb
Valve with integrated actuator

(43) Date de publication de la demande: 23.06.2004
(73) Titulaire: Techspace Aero S.A., 4041 Herstal (BE)
(72) Inventeur: Delobel, Pierre, 4031 Angleur (BE); Defloo, Yves Aimé Georges Ghislain, 4031 Angleur (BE); Servais, Thomas Hugues Benoit, 1348 Louvain-la-Neuve (BE)
(74) Mandataire: pronovem

(56) Documents cités:
- EP-A- 0 750 148
- EP-A- 0 786 534
- CH-A- 373 935
- DE-A- 2 553 163
- DE-A- 3 800 807
- DE-A- 19 825 574
- FR-A- 2 675 237
- US-A- 3 637 187

## Description

### Objet de l'invention

La présente invention se rapporte à une vanne à clapet dont l'actionneur pneumatique est intégré dans l'écoulement du fluide.

Le domaine d'application de l'invention est celui nécessitant des vannes présentant une grande fiabilité et une étanchéité parfaite dans des conditions de pression et température très sévères. En particulier, l'invention s'applique, dans le domaine aérospatial, à des vannes d'isolement entre réservoirs à carburants liquides (ergols : hydrogène et oxygène liquides) et moteurs. Les températures de fonctionnement de telles vannes sont en général très basses.

### Etat de la technique

Les vannes existantes sont souvent munies d'actionneurs pneumatiques dont l'étanchéité est assurée par des joints. Dans les applications où les fuites sont critiques, il est nécessaire de munir la vanne d'un système de double barrière, avec un conduit de récolte et d'évacuation des fuites des joints, situé au niveau de la cavité comprise entre ceux-ci.

Plusieurs montages sont également réalisés avec un ou deux soufflets réalisant l'étanchéité. Le soufflet délimite une cavité isolée du fluide circulant dans le conduit d'écoulement. L'ouverture du clapet est réalisée par injection d'un fluide de commande dans cette cavité (par ex. de l'hélium).

Dans les montages connus, le soufflet agit par l'intermédiaire d'une pièce soudée ou vissée à une tige qui elle-même actionne l'obturateur.

De telles vannes sont de conception et montage compliqués, les différentes pièces devant respecter des tolérances strictes, ce qui ne rencontre pas le souci actuel de simplification et de réduction des coûts du matériel spatial.

Le document US-A-3,637,187 décrit une vanne à clapet comprenant un corps tubulaire droit avec siège transversal, dans laquelle le clapet est monté sur une tige présentant deux parties axiales espacées qui sont guidées par des moyens fixés au corps de vanne pour assurer un mouvement axial précis du clapet par rapport à son siège. La mise en mouvement de la tige est assurée par le contrôle d'un fluide sous pression dans un soufflet et/ou par l'action d'un ressort de rappel.

### Buts de l'invention

La présente invention vise à fournir une vanne à clapet et actionneur pneumatique intégré ne présentant pas les inconvénients de l'état de la technique.

En particulier, l'invention a pour but de simplifier la réalisation et le montage de ce type de vanne.

L'invention a encore pour but de réduire le nombre de composants par rapport aux solutions proposées dans l'état de la technique.

### Principaux éléments caractéristiques de l'invention

La présente invention concerne une vanne à clapet présentant un obturateur et un actionneur pneumatique intégré dans la vanne, ledit actionneur comprenant un soufflet métallique solidaire de l'obturateur, caractérisée en ce que ledit soufflet est soudé directement à une bride intermédiaire, du côté aval de la vanne et directement à l'obturateur au niveau d'une pièce d'extrémité, du côté amont de la vanne.

Selon l'invention, la bride intermédiaire est une pièce rapportée reliant deux corps de vanne.

Toujours selon l'invention, la bride intermédiaire comprend un dispositif d'admission de fluide de commande dans l'actionneur.

Avantageusement, la pièce d'extrémité coopère avec la bride intermédiaire et le soufflet pour former une chambre, destinée à la circulation du fluide de commande sous pression, qui soit parfaitement étanche par rapport au conduit d'écoulement de la vanne.

Selon l'invention, la chambre à pressuriser peut être soit intérieure, soit extérieure au soufflet.

Toujours avantageusement, un ressort de rappel assure la liaison entre la pièce d'extrémité et la partie de l'obturateur en contact avec le siège.

Selon une modalité d'exécution préférée, ledit soufflet métallique est un soufflet multi-parois obtenu par hydroformage.

La vanne de l'invention est plus particulièrement destinée à être utilisée comme vanne d'isolement dans le domaine aérospatial, de préférence à des températures élevées ou cryogéniques.

### Brève description des figures

La figure 1 représente une vue en coupe d'une vanne à clapet et actionneur pneumatique intégré, selon l'état de la technique.

La figure 2 représente une vue en coupe d'une vanne à clapet et actionneur pneumatique intégré, selon une première forme d'exécution de l'invention.

La figure 3 représente une vue en coupe d'une vanne à clapet et actionneur pneumatique intégré, selon une deuxième forme d'exécution de l'invention.

### Description d'une forme d'exécution selon l'état de la technique

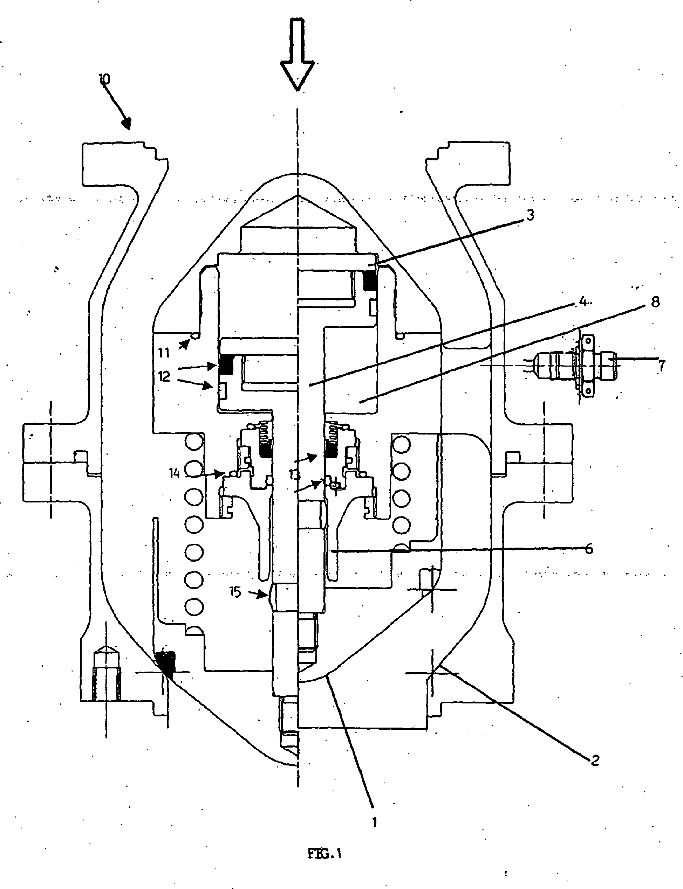

La figure 1 représente une vanne à clapet 10 avec actionneur intégré, selon l'état de l'art. Le clapet ou obturateur 1 est solidaire d'un piston 3 pouvant coulisser dans une chambre 8. Initialement, la vanne d'isolement 10 est en position fermée, le clapet 1 reposant sur le siège 2. Lorsqu'on injecte le fluide de commande dans la chambre 8 au moyen du dispositif d'admission 7, le piston 3 se déplace et le clapet 1 s'ouvre.

Ce dispositif prévoit :
- un ou plusieurs joints permettant d'assurer l'étanchéité de l'actionneur (par exemple joint 11) ;
- un ou plusieurs joints permettant d'assurer l'étanchéité du piston (par exemple joints 12).

De plus, ce dispositif nécessite généralement une tige de liaison 4 entre le piston 3 et le clapet 1, ladite tige étant également pourvue de sa propre étanchéité, au niveau d'une bague 6 dans laquelle elle coulisse (par exemple, joints 13, 14 et 15).

Tous ces joints sont classiquement des joints à lèvre, de type O-ring, etc., en polymère, ou possédant toutes autres caractéristiques bien connues de l'homme de métier.

Cette conception ne permettant pas d'obtenir une étanchéité parfaite, il est nécessaire, dans les applications visées, de prévoir un dispositif de récolte des fuites, constitué par un circuit de récolte comprenant une cavité et un conduit d'écoulement de ces fuites.

De plus, le dispositif d'admission du fluide de commande requiert l'usinage compliqué d'un bras dans le corps de vanne.

### Description d'une forme d'exécution préférée de l'invention

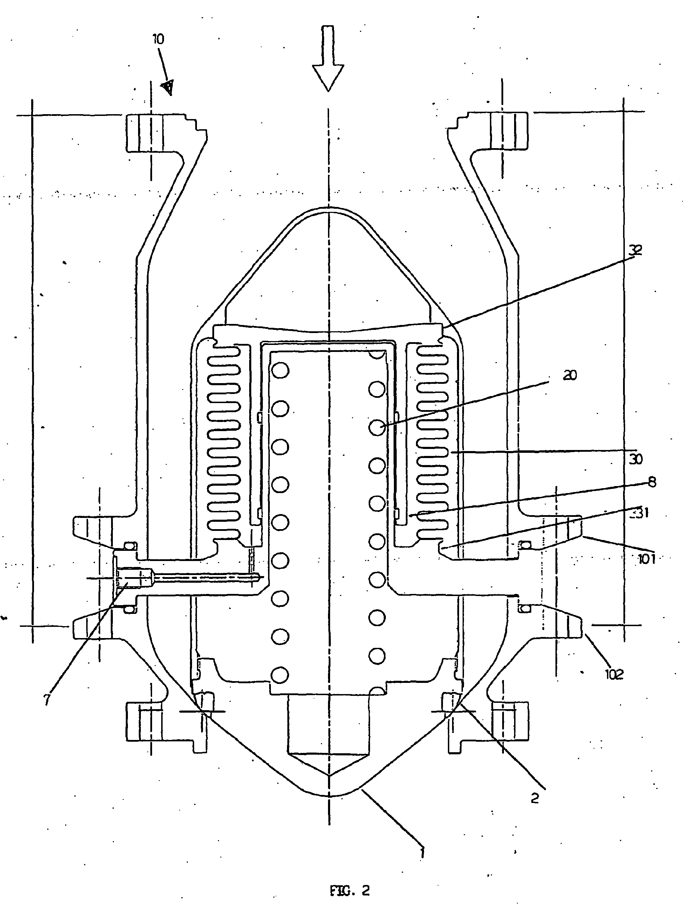

L'invention, telle que représentée à la figure 2, propose une solution à soufflet 30 en liaison directe avec le clapet 1 de la vanne 10. Ce dispositif est donc dépourvu de tige de liaison supplémentaire, telle que décrite dans l'état de la technique, ainsi que de l'étanchéité y associée.

Un soufflet 30 est soudé d'une part à une bride intermédiaire 31 et d'autre part à une pièce d'extrémité 32. Le soufflet 30 est intégré à l'intérieur du clapet 1 de la vanne 10. Une des extrémités du soufflet s'appuie donc sur le corps de vanne par l'intermédiaire d'une bride 31 montée entre la partie amont et la partie aval de la vanne 10. L'autre extrémité s'appuie directement sur le clapet à actionner au niveau de ladite pièce d'extrémité 32.

Lorsqu'une ouverture de la vanne d'isolement, initialement fermée, est souhaitée, l'intérieur du soufflet est pressurisé via la bride intermédiaire 31, via un dispositif ad hoc 7. Il en résulte une force qui dégage le clapet 1 de sa portée sur le siège 2 en contrecarrant la force de rappel du ressort coaxial 20.

La présence d'une bride intermédiaire rapportée entre deux parties du corps de vanne (101,102) et contenant le dispositif d'admission du fluide de commande permet précisément d'éviter l'usinage d'un bras dans le corps de vanne.

Les spécifications habituelles de course du clapet (25 - 30 mm) sont compatibles avec les soufflets existants.

On utilisera avantageusement dans le cadre de l'invention un soufflet métallique multi-parois soudé réalisé par hydroformage.

Le caractère innovant proposé est qu'une extrémité de l'actionneur agit directement sur l'obturateur sans pièce intermédiaire. L'autre extrémité s'appuie sur une bride intermédiaire disposée entre l'enveloppe amont et l'enveloppe aval de la vanne.

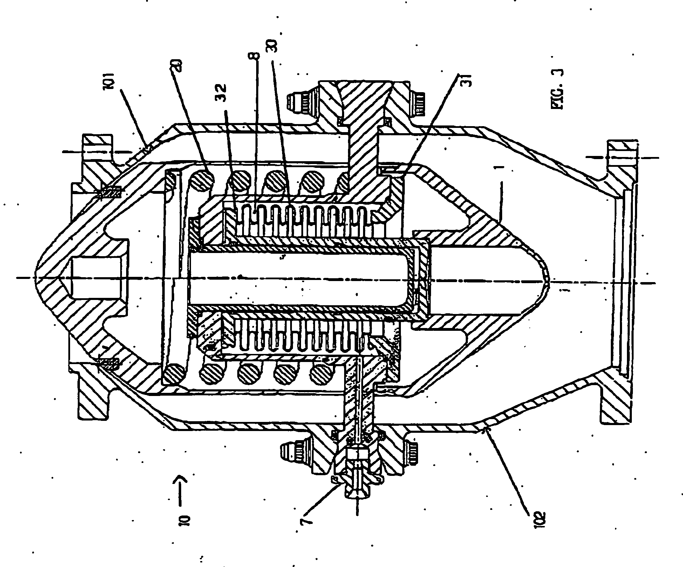

La figure 3 présente une forme d'exécution alternative de l'invention où le soufflet 30 est pressurisé par l'extérieur. Cette forme d'exécution conduit à une meilleure utilisation des caractéristiques du soufflet.

L'invention permet d'obtenir les avantages suivants :
- cette solution permet de limiter les opérations de réalisation de la vanne, notamment de fraisage, d'éviter la présence de plusieurs pièces et donc de simplifier l'assemblage de la vanne ;
- le soufflet assure une étanchéité parfaite du point de vue isolation du fluide de commande qui circule dans la vanne ;
- la fiabilité est accrue par l'utilisation d'un soufflet réalisé dans de bonnes conditions ; notamment aux températures extrêmes (cryogéniques ou élevées), l'utilisation d'un joint polymère conduit toujours à des fuites et à une mise en oeuvre délicate ;
- si les caractéristiques du soufflet le permettent, celui-ci peut assurer seul la fonction de ressort pour refermer le clapet en l'absence de pression de commande.

## Revendications

1. Vanne à clapet (10) présentant un obturateur (1,32), des moyens de guidage de l'obturateur et un actionneur pneumatique intégré dans la vanne, ledit actionneur comprenant un soufflet métallique (30) solidaire de l'obturateur (1,32), ledit soufflet (30) étant soudé directement à une bride intermédiaire (31) comprenant une pièce rapportée reliant deux corps de vanne (101,102), **caractérisée en ce que** ledit soufflet (30) et les moyens de guidage se trouve à l'intérieur de l'obturateur (1,32), ledit soufflet (30) étant également soudé directement à l'obturateur (1,32).

2. Vanne selon la revendication 1, **caractérisée en ce que** le soufflet (30) est soudé à une pièce d'extrémité (32) de l'obturateur, cette pièce d'extrémité (32) se trouvant axialement de l'autre côté du clapet (1) par rapport à ladite bride intermédiaire (31).

3. Vanne selon la revendication 1 ou 2, **caractérisée en ce que** la bride intermédiaire (31) comprend une surface cylindrique de guidage qui coopère avec une surface cylindrique coaxiale de la pièce d'extrémité (32) de l'obturateur.

4. Vanne selon la revendication 3, **caractérisé en ce que** l'axe des deux surfaces cylindriques est l'axe de la vanne.

5. vanne selon l'une quelconque des revendications précédentes, **caractérisée en ce que** la bride intermédiaire (31) comprend un dispositif d'admission de fluide de commande (7) dans l'actionneur.

6. Vanne selon l'une quelconque des revendications précédentes, **caractérisée en ce que** la pièce d'extrémité (32) coopère avec la bride intermédiaire (31) et le soufflet (30) pour former une chambre (8), destinée à la circulation du fluide de commande sous pression, qui soit parfaitement étanche par rapport au conduit d'écoulement de la vanne.

7. vanne selon la revendication 6, **caractérisée en ce que** la chambre à pressuriser (8) est intérieure au soufflet (30).

8. Vanne selon la revendication 6, **caractérisée en ce que** la chambre à pressuriser (8) est extérieure au soufflet (30).

9. Vanne selon l'une quelconque des revendications précédentes, **caractérisée en ce qu'**un ressort de rappel (20) assure une liaison entre la pièce d'extrémité (32) et la bride intermédiaire (31), maintenant la vanne fermée lorsque la chambre (8) n'est pas pressurisée.

10. Vanne selon l'une quelconque des revendications précédentes, **caractérisée en ce que** ledit soufflet métallique (30) est un soufflet multi-parois obtenu par hydroformage.

11. Utilisation d'une vanne à actionneur pneumatique intégré, selon l'une quelconque des revendications précédentes, comme vanne d'isolement dans le domaine aérospatial, de préférence à des températures élevées ou cryogéniques.

## Claims

1. Flap valve (10) comprising a shutter (1,32), means for guiding the shutter and a pneumatic actuator that is integrated into the valve, said actuator comprising a metal bellow (30) interdependent with the shutter (1,32), said bellow (30) being directly welded onto an intermediate flange (31) comprising an added part connecting two valve bodies (101,102), **characterised in that** said bellow (30) and the guiding means are located inside the shutter (1,32), said below also being directly welded onto the shutter (1,32).

2. Valve according to Claim 1, **characterised in that** the below (30) is welded to an end part (32) of the shutter, this end part (32) being axially located on the other side of the flap (1) relative to said intermediate flange (31).

3. Valve according to Claim 1 or 2, **characterised in that** the intermediate flange (31) comprises a cylindrical guiding surface that co-operates with a coaxial cylindrical surface of the end part (32) of the shutter.

4. Valve according to Claim 3, **characterised in that** the axis of both cylindrical surfaces is the axis of the valve.

5. Valve according to any one of the preceding claims, **characterised in that** the intermediate flange (31) comprises a device for allowing the control fluid (7) to pass into the actuator.

6. Valve according to any one of the preceding claims, **characterised in that** the end part (32) co-operates with the intermediate flange (31) and the bellow (30) in order to create a chamber (8) intended for the circulation of the control fluid under pressure that is perfectly tight relative to the outflow duct of the valve.

7. Valve according to Claim 6, **characterised in that** the chamber to be pressurised (8) is inside the bellow (30).

8. Valve according to Claim 6, **characterised in that** the chamber to be pressurised (8) is outside the bellow (30).

9. Valve according to any one of the preceding claims, **characterised in that** a release spring (20) ensures the connection between the end part (32) and the intermediate flange (31), maintaining the valve closed when the chamber (8) is not pressurised.

10. Valve according to any one of the preceding claims, **characterised in that** said metal bellow (30) is a multi-walled bellow obtained by hydroforming.

11. Use of a valve with an integrated pneumatic actuator according to any one of the preceding claims, as an isolating stop valve in the aerospace sector, preferably at high or cryogenic temperatures.

## Patentansprüche

1. Klappenventil (10), bestehend aus einem Verschluss (1, 32), Führungsmitteln für den Verschluss und einem im Ventil integrierten pneumatischen Stellglied; das besagte Stellglied enthält eine vom Verschluss (1, 32) getrennte Wellrohrfeder (30). Die besagte Wellrohrfeder (30) ist direkt mit einem mittleren Flansch (31) verschweißt, der wiederum ein zusammengesetztes Stück enthält, das die beiden Ventilkörper (101, 102) verbindet. Das Klappenventil ist **dadurch gekennzeichnet, dass** die besagte Wellrohrfeder (30) und die Führungsmittel sich im Inneren des Verschlusses (1,32) befinden; hierbei ist die besagte Wellrohrfeder (30) gleichermaßen direkt mit dem Verschluss (1,32) verschweißt.

2. Klappenventil gemäß Anspruch 1, **dadurch gekennzeichnet, dass** die Wellrohrfeder (30) mit einem Endstück (32) des Verschlusses verschweißt ist; dieses Endstück (32) befindet sich in axialer Richtung mit Bezug auf den besagten Mittelflansch (31) auf der anderen Seite der Klappe (1).

3. Klappenventil gemäß den Ansprüchen 1 oder 2, **dadurch gekennzeichnet, dass** der Mittelflansch (31) eine zylindrische Oberfläche als Führung enthält, die mit einer koaxialen zylindrischen Oberfläche des Endstückes (32) des Verschlusses zusammen wirkt.

4. Klappenventil gemäß Anspruch 3, **dadurch gekennzeichnet, dass** die Achse der beiden zylindrischen Oberflächen der Achse des Klappenventils entspricht.

5. Ventil gemäß einem der vorherigen Ansprüche, **dadurch gekennzeichnet, dass** der Mittelflansch (31) eine Vorrichtung für den Einlass der Steuerflüssigkeit (7) in das Stellglied enthält.

6. Klappenventil gemäß einem der vorherigen Ansprüche, **dadurch gekennzeichnet, dass** das Endstück (32) mit dem Mittelflansch (31) und der Wellrohrfeder (30) zusammen wirkt, um hierdurch eine Kammer (8) zu bilden, die der Zirkulation der Steuerflüssigkeit unter Druck dient; diese Kammer muss gegenüber der Flussleitung des Klappenventils vollständig abgedichtet sein.

7. Klappenventil gemäß dem Anspruch 6, **dadurch gekennzeichnet, dass** die unter Druck zu setzende Kammer (8) sich im Inneren der Wellrohrfeder (30) befindet.

8. Klappenventil gemäß dem Anspruch 6, **dadurch gekennzeichnet, dass** die unter Druck zu setzende Kammer (8) sich im Äußeren der Wellrohrfeder (30) befindet.

9. Klappenventil gemäß einem der vorherigen Ansprüche, **dadurch gekennzeichnet, dass** eine Rückstellfeder (20) die Verbindung zwischen dem Endstück (32) und dem Mittelflansch (31) gewährleistet, indem das Klappenventil geschlossen gehalten wird, wenn die Kammer (8) nicht unter Druck steht.

10. Klappenventil gemäß einem der vorherigen Ansprüche, **dadurch gekennzeichnet, dass** es sich bei der besagten Wellrohrfeder (30) um eine Wellrohrfeder mit mehreren Wänden handelt, die durch hydrostatisches Ziehen hergestellt wird.

11. Verwendung eines Klappenventils mit integriertem pneumatischem Stellglied gemäß einem der vorherigen Ansprüche, wie z. B. als Absperrventil im Bereich Raumfahrt, vorzugsweise bei erhöhten oder kryogenen Temperaturen.
